# EUROPEAN PATENT APPLICATION

(11) **EP 4 075 893 A1**
(43) Date of publication of application: **19.10.2022**
(21) Application number: 20899147.1
(22) Date of filing: 28.09.2020
(51) Int. Cl.: H04W 72/04

(54) **BLIND DETECTION AND DESCRAMBLING METHOD AND APPARATUS, STORAGE MEDIUM, AND ELECTRONIC DEVICE**

(30) Priority: 09.12.2019 CN 201911252257
(71) Applicant: ZTE Corporation, Shenzhen, Guangdong 518057 (CN)
(72) Inventor: WANG, Jingmei, Shenzhen, Guangdong 518057 (CN)
(74) Representative: Canzler & Bergmeier Patentanwälte Partnerschaft mbB
(86) International application number: PCT/CN2020/118546
(87) International publication number: WO 2021/114835

(57) **Abstract**

Provided in the present application are a blind detection and descrambling method and apparatus, a storage medium, and an electronic device. The method comprises: determining, according to the frame structure configured by a system, a scheduled time slot of a service type or a sending time slot of the service type; determining a downlink control information (DCI) type and a radio network temporary identifier (RNTI) type that correspond to the service type; performing corresponding physical downlink control channel (PDCCH) DCI blind detection for the DCI type within the scheduled time slot or sending time slot; and performing corresponding PDCCH RNTI descrambling for the RNTI type within the scheduled time slot or sending time slot.

## Description

### CROSS-REFERENCE TO RELATED APPLICATIONS

The present disclosure is filed based on and claims the priority to the Chinese Patent Application No. 201911252257.5 filed on December 9, 2019, the entire contents of which are incorporated herein by reference.

### TECHNICAL FIELD

The present disclosure relates to the field of wireless communications, and in particular, to a blind detection and descrambling method and device, a storage medium, and an electronic device.

### BACKGROUND

Whether in the Long-Term Evolution (LTE) protocol or the current 5G protocol, Downlink Control Information (DCI) transmitted on a Physical Downlink Control Channel (PDCCH) does not issue any message indicating a specific location where a User Equipment (UE) receives the DCI. For the UE, since it neither knows whether there is DCI belonging to itself, nor a specific location of the DCI, blind detection of the DCI needs to be carried out under a certain rule, and times of the detection of the DCI and times of descrambling of a Radio Network Temporary Identifier (RNTI) have a significant influence on efficiency and accuracy of processing of all the DCI. Especially in multi-UE terminal equipment where processing of a plurality of UEs needs to be simulated, times of DCI blind detection and times of RNTI descrambling multiply. Thus, processing capability and processing efficiency of a whole system are greatly affected, and power consumption and battery life of the terminal are also affected.

In an existing solution, unnecessary DCI blind detection processes and RNTI descrambling processes are performed in the DCI blind detection and the RNTI descrambling, thus increasing probability of false detection and missed detection of DCI. Therefore, overall processing efficiency of the system and stability of the system are adversely affected.

No effective technical solution has been set forth to the problems of false detection and missed detection in the DCI blind detection and the RNTI descrambling in the existing technology.

### SUMMARY

Embodiments of the present disclosure provide a blind detection and descrambling method and device, a storage medium and an electronic device.

According to an embodiment of the present disclosure, there is provided a blind detection and descrambling method, including: determining a scheduled time slot of a service type or a sending time slot of the service type according to a frame structure configured by a system; and determining a Downlink Control Information (DCI) type and a Radio Network Temporary Identifier (RNTI) type corresponding to the service type, performing corresponding DCI blind detection of a Physical Downlink Control Channel (PDCCH) on the DCI type in the scheduled time slot or the sending time slot, and performing corresponding RNTI descrambling of the PDCCH on the RNTI type in the scheduled time slot or the sending time slot, thus not performing the DCI blind detection and the RNTI descrambling in a time slot except the scheduled time slot or the sending time slot.

According to another embodiment of the present disclosure, there is further provided a blind detection and descrambling device, including: a first determining module configured to determine a scheduled time slot of a service type or a sending time slot of the service type according to a frame structure configured by a system; and a second determining module configured to determine a DCI type and an RNTI type corresponding to the service type, perform corresponding DCI blind detection of a PDCCH on the DCI type in the scheduled time slot or the sending time slot, and perform corresponding RNTI descrambling of the PDCCH on the RNTI type in the scheduled time slot or the sending time slot, thus not performing the DCI blind detection and the RNTI descrambling in a time slot except the scheduled time slot or the sending time slot.

According to still another embodiment of the present disclosure, there is further provided a computer-readable storage medium including a stored program, and the program performs, when being run, the blind detection and descrambling method described above.

According to yet another embodiment of the present disclosure, there is further provided an electronic device, a computer-readable storage medium includes a stored program, and the program performs, when being run, the blind detection and descrambling method described above.

### BRIEF DESCRIPTION OF DRAWINGS

The drawings described here are intended to provide a further understanding of the present disclosure and constitutes a part of the present disclosure. Exemplary embodiments of the present disclosure and the description thereof are intended to explain the present disclosure, but do not constitute improper limitation to the present disclosure. In the drawings:
FIG. 1 is a block diagram of a hardware structure of a terminal where a blind detection and descrambling method is performed according to an embodiment of the present disclosure;
FIG. 2 is a flowchart illustrating a blind detection and descrambling method according to an embodiment of the present disclosure;
FIG. 3 is a flowchart of another blind detection and descrambling process according to an embodiment of the present disclosure;
FIG. 4 is a flowchart of still another blind detection and descrambling process according to an embodiment of the present disclosure;
FIG. 5 is a schematic diagram of a frame structure and periodic sending of System Information Block (SIB) according to an embodiment of the present disclosure;
FIG. 6 is a schematic diagram illustrating a sending moment of random access signaling in a frame structure according to an embodiment of the present disclosure;
FIG. 7 is a schematic diagram illustrating uplink and downlink physical layer scheduling slots in a frame structure according to an embodiment of the present disclosure;
FIG. 8 is a block diagram of a blind detection and descrambling device according to an embodiment of the present disclosure;
FIG. 9 is a block diagram of a second determining module according to an embodiment of the present disclosure;
FIG. 10 is another block diagram of a second determining module according to an embodiment of the present disclosure; and
FIG. 11 is a schematic structural diagram of an electronic device according to an embodiment of the present disclosure.

### DETAIL DESCRIPTION OF EMBODIMENTS

The present disclosure will be described in detail below with reference to the accompanying drawings in conjunction with embodiments. It should be noted that the embodiments of the present disclosure and features therein may be combined with each other if no conflict is incurred.

It should be noted that the terms "first", "second" and the like in the description, claims and drawings of the present disclosure are used for distinguishing between similar objects, but not necessarily for describing a particular order or a chronological order.

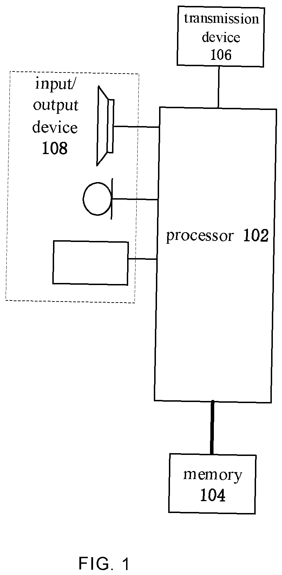

The method provided in the embodiments of the present disclosure may be performed in a mobile terminal, a computer terminal, or a similar computing device. A case where the method is performed in a terminal (e.g., a mobile phone) is taken as an example. FIG. 1 is a block diagram of a hardware structure of a terminal where a blind detection and descrambling method is performed according to an embodiment of the present disclosure. As shown in FIG. 1, a terminal 10 (e.g., a mobile phone) may include one or more processors 102 (merely one processor is shown in FIG. 1, and the processor 102 may include, but is not limited to, a processing device such as a microprocessor (e.g., a microcontroller unit (MCU)) or a programmable logic device (e.g., a field programmable gate array (FPGA))), and a memory 104 configured to store data. Optionally, the mobile terminal may further include a transmission device 106 for communication functions and an input/output device 108. It should be understood by those of ordinary skill in the art that the structure shown in FIG. 1 is merely for illustration and is not intended to limit the structure of the above terminal. For example, the terminal 10 may include more or fewer components than those shown in FIG. 1, or may have different configurations capable of performing equivalent functions as the terminal shown in FIG. 1 or performing more functions than the terminal shown in FIG. 1.

The memory 104 may be configured to store computer programs, such as software programs and modules of application software. For example, the memory 104 may be configured to store computer programs corresponding to the blind detection and scrambling method provided in the embodiments of the present disclosure. By executing the computer programs stored in the memory 104, the processor 102 executes various functional applications and performs data processing, that is, implementing the above method. The memory 104 may include a high-speed random access memory, and may also include a non-volatile memory, such as one or more magnetic storage devices, flash memories, or other non-volatile solid-state memories. In some examples, the memory 104 may further include a memory remotely arranged relative to the processor 102, and the remote memory may be connected to the terminal 10 via a network. Examples of the above network include, but are not limited to, the Internet, an intranet, a local area network, a mobile communication network, and the combinations thereof.

The transmission device 106 is configured to receive or transmit data via a network. Specific examples of the network may include a wireless network provided by a communication provider of the terminal 10. In an example, the transmission device 106 includes a Network Interface Controller (NIC) that may be connected to other network devices via a base station so as to communicate with the Internet. In another example, the transmission device 106 may be a Radio Frequency (RF) module that is configured to communicate with the Internet in a wireless manner.

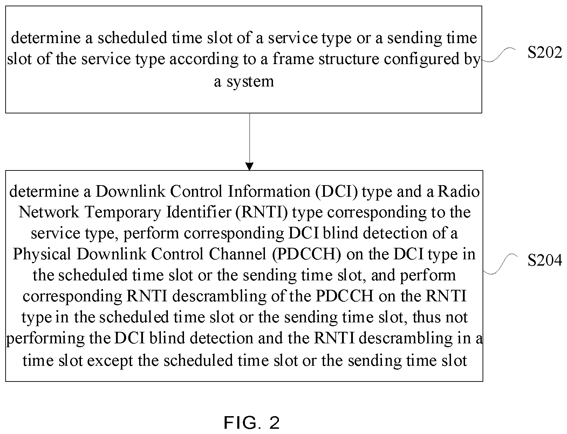

An embodiment provides a blind detection and descrambling method performed in the terminal shown in FIG. 1, and FIG. 2 is a flowchart illustrating a blind detection and descrambling method according to an embodiment of the present disclosure. As shown in FIG. 2, the method includes operations S202 and S204.

In operation S202, a scheduled time slot of a service type or a sending time slot of the service type is determined according to a frame structure configured by a system; and

In operation S204, a DCI type and an RNTI type corresponding to the service type are determined, corresponding DCI blind detection of a PDCCH is performed on the DCI type in the scheduled time slot or the sending time slot, and corresponding RNTI descrambling of the PDCCH is performed on the RNTI type in the scheduled time slot or the sending time slot, thus not performing the DCI blind detection and the RNTI descrambling in a time slot except the scheduled time slot or the sending time slot.

The RNTI type may include: a Cell-RNTI (C-RNTI), a Random AccesSI-RNTI (RA-RNTI), a Temporary-C-RNTI (T-C-RNTI), a System Information-RNTI (SI-RNTI), a Paging-RNTI (P-RNTI) and a Semi-Persistent Scheduling-C-RNTI (SPS-C-RNTI).

According to the present disclosure, the scheduled time slot of the service type or the sending time slot of the service type is determined according to the frame structure configured by the system; and the DCI type and the RNTI type corresponding to the service type are determined, the corresponding DCI blind detection of the PDCCH is performed on the DCI type in the scheduled time slot or the sending time slot, and the corresponding RNTI descrambling of the PDCCH is performed on the RNTI type in the scheduled time slot or the sending time slot, thus not performing the DCI blind detection and the RNTI descrambling in the time slot except the scheduled time slot or the sending time slot. With the above technical solutions adopted, the problems of false detection and missed detection in the processes of DCI blind detection and RNTI descrambling in the existing technology are solved. According to the above technical solutions, the scheduled time slot and the sending time slot of the service type are first determined, then the DCI type and the RNTI type of the service type are determined, the DCI blind detection of the PDCCH is performed on the DCI type in the scheduled time slot or the sending time slot, the RNTI descrambling of the PDCCH is performed on the RNTI type in the scheduled time slot or the sending time slot, and the DCI blind detection and the RNTI descrambling are not performed in the time slot except the scheduled time slot or the sending time slot, thereby producing a technical effect of reducing the false detection and the missed detection in the processes of DCI blind detection and RNTI descrambling.

In the embodiment of the present disclosure, operation S204 may be implemented in a following way: determining the scheduled time slot of the service type or the sending time slot of the service type according to the frame structure configured by the system includes: acquiring a scheduling interval or a scheduling period corresponding to the service type according to the frame structure configured by the system, with the service type including: an uplink channel type, a downlink channel type, system information, an uplink signal, and a downlink signal; and determining the scheduled time slot of the service type or the sending time slot of the service type according to the scheduling interval or the scheduling period, and the frame structure configured by the system.

In order to more clearly illustrate how to perform the corresponding DCI blind detection of the PDCCH on the DCI type in the scheduled time slot or the sending time slot, and perform the corresponding RNTI descrambling of the PDCCH on the RNTI type in the scheduled time slot or the sending time slot, performing the corresponding DCI blind detection of the PDCCH on the DCI type in the scheduled time slot or the sending time slot, and performing the corresponding RNTI descrambling of the PDCCH on the RNTI type in the scheduled time slot or the sending time slot may be implemented in a following way: in a case where a plurality of UEs are provided, the DCI blind detection is performed on one of the plurality of UEs in the scheduled time slot or the sending time slot, and the RNTI descrambling is performed on one of the plurality of UEs in the scheduled time slot or the sending time slot.

In an embodiment, operation S204 may be implemented in a following way: an overall bandwidth of the PDCCH includes a control resource set, and performing the corresponding DCI blind detection of the PDCCH on the DCI type in the scheduled time slot or the sending time slot, and performing the corresponding RNTI descrambling of the PDCCH on the RNTI type in the scheduled time slot or the sending time slot includes: performing the corresponding DCI blind detection of the control resource set on the DCI type according to a scheduling type in the scheduled time slot or the sending time slot, and performing the corresponding RNTI descrambling of the control resource set on the RNTI type in the scheduled time slot or the sending time slot, with the scheduling type including at least one of uplink dynamic adjustment or downlink dynamic adjustment.

Operation S204 may be implemented in a following way: the scheduled time slot includes at least one of an uplink air interface slot or a downlink air interface slot, and performing the corresponding DCI blind detection of the PDCCH on the DCI type in the scheduled time slot or the sending time slot, and performing the corresponding RNTI descrambling of the PDCCH on the RNTI type in the scheduled time slot or the sending time slot includes at least one of the following operations: performing the corresponding DCI blind detection of the PDCCH on the DCI type according to the uplink dynamic adjustment in the uplink air interface slot or the sending time slot, and performing the corresponding RNTI descrambling of the PDCCH on the RNTI type according to the uplink dynamic adjustment in the uplink air interface slot or the sending time slot; and performing the corresponding DCI blind detection of the PDCCH on the DCI type according to the downlink dynamic adjustment in the downlink air interface slot or the sending time slot, and performing the corresponding RNTI descrambling of the PDCCH on the RNTI type according to the downlink dynamic adjustment in the downlink air interface slot or the sending time slot.

Before operation S204, the method may further include following operations: the DCI type includes at least one of uplink DCI or downlink DCI, and the scheduled time slot further includes at least one of an uplink scheduling slot or a downlink scheduling slot, the corresponding DCI blind detection of the PDCCH is performed on the DCI type in the scheduled time slot or the sending time slot, the corresponding RNTI descrambling of the PDCCH is performed on the RNTI type in the scheduled time slot or the sending time slot, and the method includes at least one of following operations: performing the corresponding DCI blind detection of the PDCCH on the uplink DCI in the uplink scheduling slot or the sending time slot, and performing the corresponding RNTI descrambling of the PDCCH on the RNTI type in the uplink scheduling slot or the sending time slot; and performing the corresponding DCI blind detection of the PDCCH on the downlink DCI in the downlink scheduling slot or the sending time slot, and performing the corresponding RNTI descrambling of the PDCCH on the RNTI type in the downlink scheduling slot or the sending time slot.

It should be noted that, in a large-bandwidth and large-capacity wireless communication scenario, especially in a 5G Enhanced Mobile Broadband (EMBB) scenario, the DCI blind detection involves a large number of RNTI types and a large number of times of RNTI descrambling, which affects efficiency and accuracy of the DCI blind detection. Therefore, for improving efficiency of the DCI blind detection and the RNTI descrambling, the times of the DCI blind detection and the times of the RNTI descrambling times are reduced in the existing technology. For example, according to lengths of DCI, different types of DCI with a same length are combined and used as one type of DCI for blind detection, thereby reducing the times of the blind detection. Possible RNTI values are calculated according to candidate locations, RNTIs are accordingly grouped, and the grouped RNTIs are used for descrambling in the detection of a corresponding candidate location. However, the above solution just focuses on optimization of blind detection in a single time slot, but fails to consider optimization of the times of the blind detection and the times of the RNTI descrambling from the aspect of overall system timing, thus allowing unnecessary DCI blind detection processes and RNTI descrambling processes, increasing the probability of false detection of DCI and missed detection of DCI, and adversely affecting the overall processing efficiency and the stability of the system.

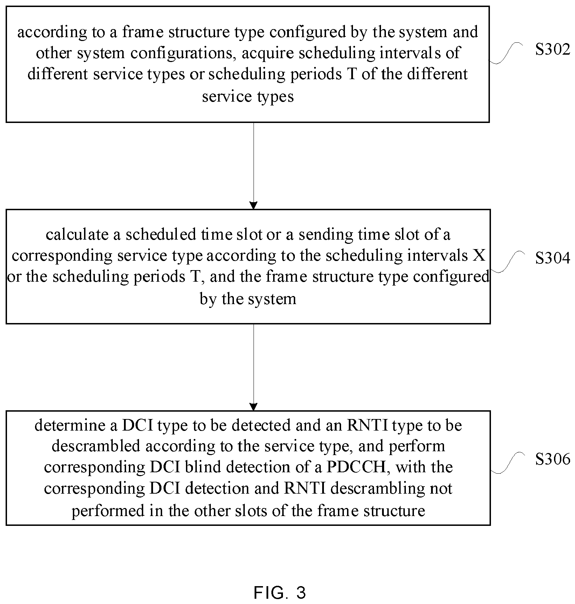

In order to solve the above problems, a blind detection and descrambling process is illustrated below by an example, but the technical solutions in the embodiments of the present disclosure are not limited thereto. As shown in FIG. 3, the technical solutions in the example of the present disclosure includes following operations S302, S304 and S306.

In operation S302, according to a frame structure type configured by the system and other system configurations, scheduling intervals X (unit: slot) of different service types or scheduling periods T (unit: slot) of the different service types are acquired. The service types may be a specific uplink channel type and a specific downlink channel type, or may be various system information, or may be an uplink signal and a downlink signal, and sending or reception of the service types depend on indications in DCI on a PDCCH.

In operation S304, a scheduled time slot or a sending time slot slot N (time slot) of a corresponding service type is calculated according to the scheduling intervals X or the scheduling periods T, and the frame structure type configured by the system.

In operation S306, a DCI type to be detected and an RNTI type to be descrambled are determined according to the service type in the slot N determined in S304, and corresponding DCI blind detection of a PDCCH is performed. In the other slots of the frame structure, the corresponding DCI detection and RNTI descrambling are not performed.

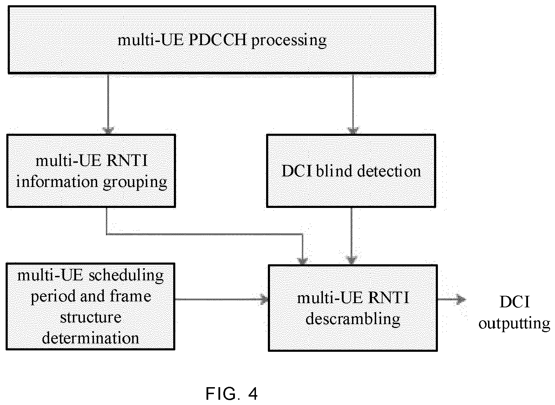

It should be noted that the above operations may be applied to the DCI blind detection and the RNTI descrambling of a plurality of UEs shown in FIG. 4, and may be specifically implemented as follows:
operation 1, performing PDCCH processing on a plurality of UEs;
operation 2, determining scheduling periods and frame structures of the plurality of UEs;
operation 3, grouping RNTI information of the plurality of UEs;
operation 4, performing DCI blind detection;
operation 5, performing RNTI descrambling on the plurality of UEs; and
operation 6, outputting DCI.

In summary, with the above technical solutions adopted, the corresponding DCI blind detection of the PDCCH and the corresponding RNTI descrambling of the PDCCH are performed merely in the scheduling slot or the sending time slot, and are not performed in the other time slots, thereby reducing the times of the blind detection and the times of the RNTI descrambling, reducing the probability of the false detection of DCI, increasing the efficiency of the DCI blind detection, improving performance and stability of the whole system, and reducing the power consumption of the terminal.

A blind detection and descrambling process is illustrated below by an example, but the technical solutions in the embodiments of the present disclosure are not limited thereto, and the technical solutions in the example of the present disclosure are as follows.

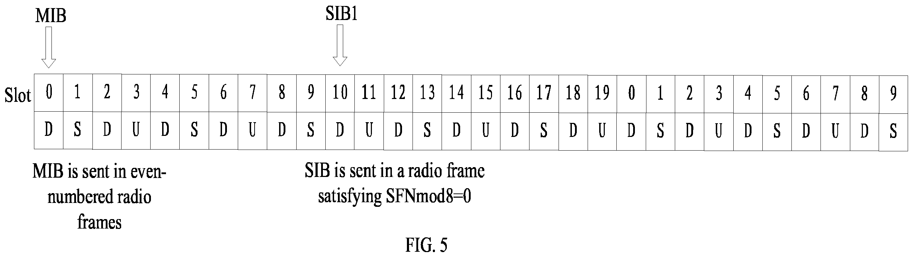

FIG. 5 is a schematic diagram of a frame structure according to an embodiment of the present disclosure, and cycle timing of an SIB is illustrated by FIG. 5. A search space for DCI is divided into a Common Search Space (CSS) and a UE-specific Search Space (USS) according to the 5G EMBB protocol, and the two search spaces may occupy different frequency domain bandwidths.

In the CSS, RNTI types are classified and grouped according to frame structure types, and periods or timing of channels scheduled by DCI scrambled by different RNTI types. Merely in a scheduled time slot which conforms to a transmission period or timing of a certain channel (signal), DCI blind detection may be enabled, and a corresponding RNTI type is used for a descrambling process.

In multi-UE terminal equipment, connection between a plurality of UEs and a same base station cell is realized based on same hardware equipment. Therefore, it may be taken that SIB (DCI scrambled by an SI-RNTI) information of the plurality of UEs detected by a PDCCH are the same as each other, so that merely one UE needs to perform periodical detection in a radio frame satisfying SFNmod8=0 when SIB blind detection is carried out in the CSS, and not every UE needs to perform blind detection of the SIB. It may also be taken that, when DCI blind detection of a PDCCH is carried out, descrambling using an SI-RNTI is needed to be carried out merely in slot10 corresponding to the radio frame satisfying SFNmod8=0, and the descrambling using the SI-RNTI is not needed to be carried out in the other slots. With no need to carry out SIB blind detection independently, the other UEs in the multi-UE terminal may directly use a detected SIB stream, thereby reducing times of the blind detection and times of the RNTI descrambling. The RNTI types may include: the RA-RNTI, the T-C-RNTI, the C-RNTI, the SI-RNTI, the P-RNTI, and the SPS-C-RNTI.

A blind detection and descrambling process is illustrated below by an example, but the technical solutions in the embodiments of the present disclosure are not limited thereto, and the technical solutions in the example of the present disclosure are as follows.

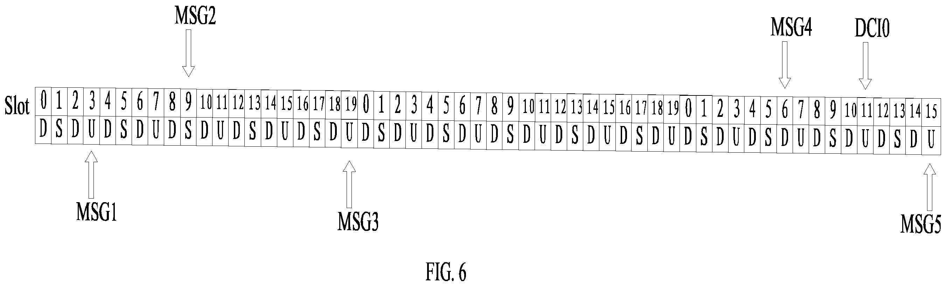

FIG. 6 illustrates random access cycle timing. Description of the present example is given based on such frame structure. In a process of a UE accessing a base station cell, all downlink signaling such as MSG2 and MSG4 need to be obtained by detecting corresponding DCI on a PDCCH. As shown in FIG. 6, sending moments of all the signaling have a certain timing relationship. As a sending end, a UE is aware that MSG1 is sent in slot3 and MSG2 is to be sent after 6 slots, so that the UE does not need to carry out blind detection of MSG2 in each slot, and merely needs to carry out descrambling of DCI using an RA-RNTI after 6 slots since the sending of MSG1. Similarly, when the UE is aware of a sending slot of MSG3, the UE merely needs to carry out descrambling of DCI using a T-C-RNTI after 27 slots since the sending of MSG3. The descrambling using the RA-RNTI or the T-C-RNTI is not needed in the other time slots. Thus, the times of the RNTI descrambling are reduced, probability of false detection of MSG2 and MSG4 is reduced, and stability of access to the system is improved.

The access timing shown in FIG. 6 is the access timing in the illustrated 5G EMBB frame structure negotiated by the base station and the UE according to processing capability, and signaling scheduling timing of the 5G EMBB frame structure may vary according to a change of the frame structure and different processing capabilities. In any case, the descrambling process of an RNTI may be optimized with the above method.

In an LTE Time Division Duplex (TDD) system, a frame structure is similar to the 5G EMBB frame structure, and corresponding DCI detection may be enabled according to the frame structure and access signaling scheduling timing, so as to reduce the times of the blind detections and the times of the RNTI descrambling.

A blind detection and descrambling process is illustrated below by an example, but the technical solutions in the embodiments of the present disclosure are not limited thereto, and the technical solutions in the example of the present disclosure are as follows.

In a large-bandwidth scenario such as a 5G EMBB scenario, an overall bandwidth of a PDCCH is divided into different Band Width Parts (BWPs) and Control Resource Sets (CORSETs), each UE is allocated an exclusive CORSET, and exclusive DCI scheduling of each UE is also carried out in the exclusive CORSET. Therefore, in multi-UE terminal equipment, RNTIs of UEs are first grouped according to BWP IDs and CORSET IDs to which the UEs belong, and a grouped RNTI value is used for a descrambling process merely when DCI blind detection is carried out in a corresponding CORSET. In the multi-UE terminal equipment, RNTI sets of the UEs may be dynamically maintained in real time according to high-level scheduling: when a certain UE is released by the system (a UE instance is deleted), an RNTI value of the UE is deleted from a maintained group, so as to reduce the times of the RNTI descrambling; and when a new UE instance is added to the system, an RNTI value of the new UE instance is added to a corresponding group according to a CORSET ID of the new UE instance through the maintenance.

When blind detection of DCI of a physical layer is carried out in an exclusive CORSET, calculation may be performed according to a scheduling type (the dynamic scheduling or the semi-persistent scheduling) and a frame structure, so as to perform blind detection of a DCI type merely in a certain scheduling slot and use a corresponding RNTI type for a descrambling process. In 5G EMBB scenarios, frame structures defined by the protocol are typically of a TDD system, and uplink time slots and downlink time slots are time-divided.

In a case of uplink dynamic scheduling, a fixed scheduling interval exists from sending of scheduling DCI to sending of uplink data by a terminal through an air interface according to scheduling parameters, and is generally defined as K2 (unit: slot). Thus, merely in a time slot which is K2 slots before an uplink air interface slot, uplink DCI blind detection is enabled and an RNTI is used for descrambling; and neither blind detection of uplink DCI nor RNTI descrambling is carried out in the other time slots.

In a case of downlink dynamic scheduling, a fixed scheduling interval exists from sending of scheduling DCI to reception and analysis of downlink data by a terminal according to scheduling parameters, and is generally defined as K0 (unit: slot). Thus, merely in a time slot which is K0 slots before a downlink air interface slot, downlink DCI blind detection is enabled and an RNTI is used for descrambling; and neither blind detection of downlink DCI nor RNTI descrambling is carried out in the other time slots.

If transmission of downlink and downlink physical layer data in the wireless system is based on semi-persistent scheduling (DCI scrambled by an SPSI-RNTI), according to a configured semi-persistent scheduling period T, no dynamical scheduling DCI exists in the period T, so that detection of uplink or downlink DCI and RNTI descrambling are not needed in the period T, thereby reducing the times of the blind detection and the times of the RNTI descrambling, increasing detection efficiency and reducing the probability of the false detection of DCI.

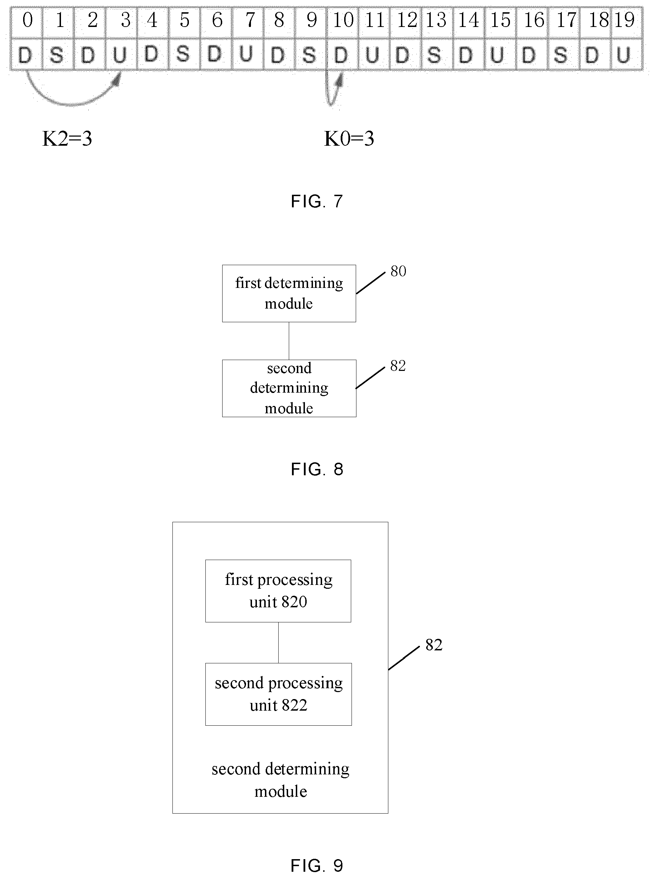

FIG. 7 shows a scheduling timing diagram of 5G EMBB uplink and downlink physical layers. After a UE accesses a base station cell, scheduling of uplink physical layer data and scheduling of downlink physical layer data both need to be realized by a PDCCH detecting corresponding DCI. The detection is carried out in a USS. As shown in FIG. 7, an uplink scheduling interval K2 satisfies K2=3, K2 is configured for the UE by the base station (also related to processing capability of the UE), that is, DCI needs to be scheduled 3 slots ahead of an uplink slot. Thus, the UE performs blind detection of uplink DCI according to a configured frame structure merely in a time slot that is 3 slots ahead of the uplink slot, and does not need to perform blind detection of the uplink DCI or RNTI descrambling in the other time slots. Similarly, K0=0 in the drawing (K0 is also configured for the UE by the base station), and configurations of K2 and K0 in FIG. 7 are configurations in the 5G EMBB frame structure negotiated between the base station and the UE according to the processing capability. When the frame structure changes and the processing capacity differs, values of K2 and K0 may vary.

The above is merely an example, and the present embodiment does not make any limitation herein.

In summary, the UE needs to perform blind detection of downlink DCI and RNTI descrambling in each downlink slot, but DCI blind detection and descrambling are not needed in uplink slots according to the frame structure. Thus, the times of the DCI blind detection and the times of the RNTI descrambling can be reduced, the probability of false detection of the uplink DCI and the downlink DCI can be reduced, and data processing stability of the system can be improved.

Through the above description of the implementations, those of ordinary skill in the art can understand clearly that the method according to the above embodiments may be implemented by software together with a necessary general-purpose hardware platform, and may also be implemented by hardware, but the former is better in many cases. Based on such understanding, the technical solutions of the present disclosure or a part of the technical solutions of the present disclosure contributing to the existing technology may be implemented in the form of a software product, which is stored in a storage medium (such as a Read-Only Memory (ROM)/Random Access Memory (RAM), a magnetic disk and an optical disc) and includes several instructions to enable terminal equipment (which may be a mobile phone, a computer, a server or a network device) to perform the method described in any one embodiment of the present disclosure.

The embodiment further provides a blind detection and descrambling device configured to implement the above embodiments and implementations, and what is described above will not be repeated below. The term "module" used below refers to a combination of software and/or hardware that can perform predetermined functions. Although the device described in the following embodiments is better implemented by software, the implementations of the device by hardware or a combination of software and hardware are possible and can be conceived.

FIG. 8 is a block diagram of a blind detection and descrambling device according to an embodiment of the present disclosure. As shown in FIG. 8, the device includes: a first determining module 80 configured to determine a scheduled time slot of a service type or a sending time slot of the service type according to a frame structure configured by a system; and a second determining module 82 configured to determine a DCI type and an RNTI type corresponding to the service type, perform corresponding DCI blind detection of a PDCCH on the DCI type in the scheduled time slot or the sending time slot, and perform corresponding RNTI descrambling of the PDCCH on the RNTI type in the scheduled time slot or the sending time slot, thus not performing the DCI blind detection and the RNTI descrambling in a time slot except the scheduled time slot or the sending time slot.

According to the present disclosure, the scheduled time slot of the service type or the sending time slot of the service type is determined according to the frame structure configured by the system; and the DCI type and the RNTI type corresponding to the service type is determined, the corresponding DCI blind detection of the PDCCH is performed on the DCI type in the scheduled time slot or the sending time slot, and the corresponding RNTI descrambling of the PDCCH is performed on the RNTI type in the scheduled time slot or the sending time slot, thus not performing the DCI blind detection and the RNTI descrambling in the time slot except the scheduled time slot or the sending time slot. With the above technical solutions adopted, the problems of false detection and missed detection in the processes of DCI blind detection and RNTI descrambling in the existing technology are solved. According to the above technical solutions, the scheduled time slot and the sending time slot of the service type are first determined, then the DCI type and the RNTI type of the service type are determined, the DCI blind detection of the PDCCH is performed on the DCI type in the scheduled time slot or the sending time slot, the RNTI descrambling of the PDCCH is performed on the RNTI type in the scheduled time slot or the sending time slot, and the DCI blind detection and the RNTI descrambling are not performed in the time slot except the scheduled time slot or the sending time slot, thereby producing a technical effect of reducing the false detection and the missed detection in the processes of DCI blind detection and RNTI descrambling.

In the embodiment of the present disclosure, as shown in FIG. 8, the second determining module 82 is further configured to, in a case where a plurality of UEs are provided, perform the DCI blind detection on one of the plurality of UEs in the scheduled time slot or the sending time slot, and perform the RNTI descrambling on one of the plurality of UEs in the scheduled time slot or the sending time slot.

In the embodiment of the present disclosure, as shown in FIG. 8, an overall bandwidth of the PDCCH includes a control resource set, and the second determining module 82 is further configured to perform the corresponding DCI blind detection of the control resource set on the DCI type according to a scheduling type in the scheduled time slot or the sending time slot, and perform the corresponding RNTI descrambling of the control resource set on the RNTI type in the scheduled time slot or the sending time slot, with the scheduling type including at least one of uplink dynamic adjustment or downlink dynamic adjustment.

In the embodiment of the present disclosure, as shown in FIG. 9, the scheduled time slot includes at least one of an uplink air interface slot or a downlink air interface slot, and the second determining module 82 may at least include one of: a first processing unit 820 configured to perform the corresponding DCI blind detection of the PDCCH on the DCI type according to the uplink dynamic adjustment in the uplink air interface slot or the sending time slot, and perform the corresponding RNTI descrambling of the PDCCH on the RNTI type according to the uplink dynamic adjustment in the uplink air interface slot or the sending time slot; and a second processing unit 822 configured to perform the corresponding DCI blind detection of the PDCCH on the DCI type according to the downlink dynamic adjustment in the downlink air interface slot or the sending time slot, and perform the corresponding RNTI descrambling of the PDCCH on the RNTI type according to the downlink dynamic adjustment in the downlink air interface slot or the sending time slot.

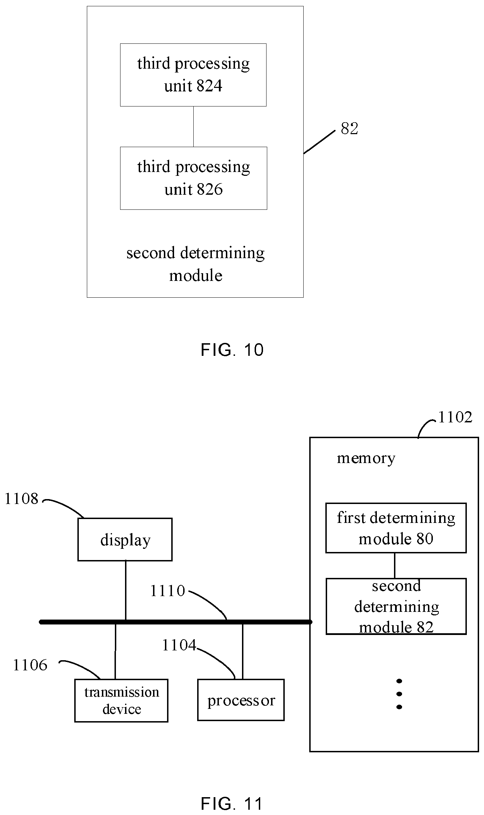

In the embodiment of the present disclosure, as shown in FIG. 10, the DCI type includes at least one of uplink DCI or downlink DCI, the scheduled time slot further includes at least one of an uplink scheduling slot or a downlink scheduling slot, and the second determining module 82 includes at least one of: a third processing unit 824 configured to perform the corresponding DCI blind detection of the PDCCH on the uplink DCI in the uplink scheduling slot or the sending time slot, and perform the corresponding RNTI descrambling of the PDCCH on the RNTI type in the uplink scheduling slot or the sending time slot; and a fourth processing unit 826 configured to perform the corresponding DCI blind detection of the PDCCH on the downlink DCI in the downlink scheduling slot or the sending time slot, and perform the corresponding RNTI descrambling of the PDCCH on the RNTI type in the downlink scheduling slot or the sending time slot.

In the embodiment of the present disclosure, as shown in FIG. 8, the first determining module 80 is further configured to acquire a scheduling interval or a scheduling period corresponding to the service type according to the frame structure configured by the system, with the service type including: an uplink channel type, a downlink channel type, system information, an uplink signal and a downlink signal; and determine the scheduled time slot of the service type or the sending time slot of the service type according to the scheduling interval or the scheduling period, and the frame structure configured by the system.

The embodiments of the present disclosure further provide a computer-readable storage medium including a stored program, and the program performs, when being run, any of the methods described above.

In an embodiment, the storage medium may be configured to store program codes used for performing the following operations: S1, determining a scheduled time slot of a service type or a sending time slot of the service type according to a frame structure configured by a system; and S2, determining a DCI type and an RNTI type corresponding to the service type, performing corresponding DCI blind detection of a PDCCH on the DCI type in the scheduled time slot or the sending time slot, and performing corresponding RNTI descrambling of the PDCCH on the RNTI type in the scheduled time slot or the sending time slot, thus not performing the DCI blind detection and the RNTI descrambling in a time slot except the scheduled time slot or the sending time slot.

In an embodiment, the above storage medium may include, but is not limited to, various media capable of storing the program codes, such as a Universal Serial Bus Flash Disk (a USB flash disk), an ROM, an RAM, a mobile hard disk, a magnetic disk and an optical disc.

The embodiments of the present disclosure further provide an electronic device, including a memory having a computer program stored therein, and a processor. As shown in FIG. 11, the electronic device includes a memory 1102 having a computer program stored therein, and a processor 1104 configured to run the computer program to perform the operations according to any one of the method embodiments described above.

In addition, the electronic device further includes: a display 1108; and a connection bus 1110 configured to connect all the modules/components in the electronic device described above.

In an embodiment, the electronic device may further include a transmission device connected to the processor, and an input/output device connected to the processor.

In an embodiment, the processor may be configured to perform the following operations through the computer program: S1, determining a scheduled time slot of a service type or a sending time slot of the service type according to a frame structure configured by a system; and S2, determining a DCI type and an RNTI type corresponding to the service type, performing corresponding DCI blind detection of a PDCCH on the DCI type in the scheduled time slot or the sending time slot, and performing corresponding RNTI descrambling of the PDCCH on the RNTI type in the scheduled time slot or the sending time slot, thus not performing the DCI blind detection and the RNTI descrambling in a time slot except the scheduled time slot or the sending time slot.

As an example, as shown in FIG. 11, the memory 1102 may include, but is not limited to, the first determining module 82 and the second determining module 84 in the blind detection and descrambling device described above. In addition, reference may be made to the examples described in the above embodiments and implementations for specific examples of the present embodiment, and thus the present embodiment is not described in detail here.

Apparently, it should be understood by those of ordinary skill in the art that all the modules or operations of the present disclosure described above may be implemented by a general-purpose computing device, may be integrated in a single computing device or distributed on a network composed of a plurality of computing devices. Optionally, the modules or operations may be implemented by program codes executable by a computing device, so that the modules or operations can be stored in a storage device and executed by a computing device. In some cases, the operations illustrated or described may be performed in an order different from that described herein. The modules or operations may be separately made into integrated circuit modules, or some of the modules or operations may be made into a single integrated circuit module. Thus, the present disclosure is not limited to any specific combination of hardware and software.

The description above is merely of the desirable embodiments of the present disclosure, but is not intended to limit the present disclosure. Various modifications and changes may be made to the present disclosure by those of ordinary skill in the art. Any modification, equivalent replacement and improvement made within the principle of the present disclosure should be included in the scope of the present disclosure.

## Claims

1. A blind detection and descrambling method, comprising:
determining a scheduled time slot of a service type or a sending time slot of the service type according to a frame structure configured by a system; and
determining a Downlink Control Information (DCI) type and a Radio Network Temporary Identifier (RNTI) type corresponding to the service type, performing corresponding DCI blind detection of a Physical Downlink Control Channel (PDCCH) on the DCI type in the scheduled time slot or the sending time slot, and performing corresponding RNTI descrambling of the PDCCH on the RNTI type in the scheduled time slot or the sending time slot, thus not performing the DCI blind detection and the RNTI descrambling in a time slot except the scheduled time slot or the sending time slot.

2. The method of claim 1, wherein performing the corresponding DCI blind detection of the PDCCH on the DCI type in the scheduled time slot or the sending time slot, and performing the corresponding RNTI descrambling of the PDCCH on the RNTI type in the scheduled time slot or the sending time slot comprises:
in a case where a plurality of User Equipment (UEs) are provided, performing the DCI blind detection on one of the plurality of UEs in the scheduled time slot or the sending time slot, and performing the RNTI descrambling on one of the plurality of UEs in the scheduled time slot or the sending time slot.

3. The method of claim 1, wherein an overall bandwidth of the PDCCH comprises a control resource set, and performing the corresponding DCI blind detection of the PDCCH on the DCI type in the scheduled time slot or the sending time slot, and performing the corresponding RNTI descrambling of the PDCCH on the RNTI type in the scheduled time slot or the sending time slot comprises:
performing the corresponding DCI blind detection of the control resource set on the DCI type according to a scheduling type in the scheduled time slot or the sending time slot, and performing the corresponding RNTI descrambling of the control resource set on the RNTI type in the scheduled time slot or the sending time slot, with the scheduling type comprising at least one of uplink dynamic adjustment or downlink dynamic adjustment.

4. The method of claim 3, wherein the scheduled time slot comprises at least one of an uplink air interface slot or a downlink air interface slot, and performing the corresponding DCI blind detection of the PDCCH on the DCI type in the scheduled time slot or the sending time slot, and performing the corresponding RNTI descrambling of the PDCCH on the RNTI type in the scheduled time slot or the sending time slot comprises at least one of:
performing the corresponding DCI blind detection of the PDCCH on the DCI type according to the uplink dynamic adjustment in the uplink air interface slot or the sending time slot, and performing the corresponding RNTI descrambling of the PDCCH on the RNTI type according to the uplink dynamic adjustment in the uplink air interface slot or the sending time slot; and
performing the corresponding DCI blind detection of the PDCCH on the DCI type according to the downlink dynamic adjustment in the downlink air interface slot or the sending time slot, and performing the corresponding RNTI descrambling of the PDCCH on the RNTI type according to the downlink dynamic adjustment in the downlink air interface slot or the sending time slot.

5. The method of claim 1, wherein the DCI type comprises at least one of uplink DCI or downlink DCI, the scheduled time slot further comprises at least one of an uplink scheduling slot or a downlink scheduling slot, and performing the corresponding DCI blind detection of the PDCCH on the DCI type in the scheduled time slot or the sending time slot, and performing the corresponding RNTI descrambling of the PDCCH on the RNTI type in the scheduled time slot or the sending time slot comprises at least one of:
performing the corresponding DCI blind detection of the PDCCH on the uplink DCI in the uplink scheduling slot or the sending time slot, and performing the corresponding RNTI descrambling of the PDCCH on the RNTI type in the uplink scheduling slot or the sending time slot; and
performing the corresponding DCI blind detection of the PDCCH on the downlink DCI in the downlink scheduling slot or the sending time slot, and performing the corresponding RNTI descrambling of the PDCCH on the RNTI type in the downlink scheduling slot or the sending time slot.

6. The method of claim 1, wherein determining the scheduled time slot of the service type or the sending time slot of the service type according to the frame structure configured by the system comprises:
acquiring a scheduling interval or a scheduling period corresponding to the service type according to the frame structure configured by the system, with the service type comprising: an uplink channel type, a downlink channel type, system information, an uplink signal and a downlink signal; and
determining the scheduled time slot of the service type or the sending time slot of the service type according to the scheduling interval or the scheduling period, and the frame structure configured by the system.

7. A blind detection and descrambling device, comprising:
a first determining module configured to determine a scheduled time slot of a service type or a sending time slot of the service type according to a frame structure configured by a system; and
a second determining module configured to determine a DCI type and an RNTI type corresponding to the service type, perform corresponding DCI blind detection of a PDCCH on the DCI type in the scheduled time slot or the sending time slot, and perform corresponding RNTI descrambling of the PDCCH on the RNTI type in the scheduled time slot or the sending time slot, thus not performing the DCI blind detection and the RNTI descrambling in a time slot except the scheduled time slot or the sending time slot.

8. The device of claim 7, wherein the second determining module is further configured to, in a case where a plurality of UEs are provided, perform the DCI blind detection on one of the plurality of UEs in the scheduled time slot or the sending time slot, and perform the RNTI descrambling on one of the plurality of UEs in the scheduled time slot or the sending time slot.

9. A computer-readable storage medium having a computer program stored therein, wherein the computer program is configured to perform, when being run, the method of any one of claims 1 to 6.

10. An electronic device, comprising a memory having a computer program stored therein, and a processor configured to run the computer program to perform the method of any of claims 1 to 6.
